# EUROPEAN PATENT SPECIFICATION

(11) **EP 2 210 067 B1**
(45) Date of publication and mention of the grant of the patent: **10.10.2012**
(21) Application number: 08848286.4
(22) Date of filing: 04.11.2008
(51) Int. Cl.: G01D 11/28, G04B 19/32, G04C 17/00, G04G 9/00, G04G 9/04

(54) **ANALOG WRISTWATCH WITH AUTOMATIC ELECTROLUMINESCENT LIGHTING OF THE DIAL**
ANALOGE ARMBANDUHR MIT AUTOMATISCHER ELEKTROLUMINESZENTER ZIFFERNBLATTBELEUCHTUNG
MONTRE-BRACELET ANALOGIQUE AVEC ÉCLAIRAGE ÉLECTROLUMINESCENT AUTOMATIQUE DU CADRAN

(30) Priority: 06.11.2007 IT TO20070783
(43) Date of publication of application: 28.07.2010
(73) Proprietor: Franzosi, Massimo, 30172 Venezia (IT)
(72) Inventor: Franzosi, Massimo, 30172 Venezia (IT)
(74) Representative: Rondano, Davide
(86) International application number: PCT/IB2008/054579
(87) International publication number: WO 2009/060380

(56) References cited:
- EP-A- 1 094 373
- DE-A1- 19 807 483
- US-A- 666 381
- US-A- 1 441 069
- US-A- 5 265 071

## Description

The present invention relates to an analog wristwatch, either in only-time version (that is to say, able to indicate the time only) or in the chronograph version (that is to say, performing both the function of indicating the time and the function of a chronometer or timer), having a dial provided with electroluminescent lighting means, as specified in the preamble of independent claim 1.

The use of the electroluminescence technology for the lighting of watch dials, either analog or digital, is generally known. US Patent US5265071 discloses for instance an analog wristwatch provided with an electroluminescent dial comprising a flexible transparent substrate, an inner layer including electrically conductive material in contact with the substrate, an electroluminescent layer including a blend of electroluminescent material in a binder adhering to the inner layer, and an outer layer covering the electroluminescent layer and including electrically conductive material. The substrate and the other three layers form a single assembly having a through hole able to receive rotating pins to which the hands of the hours, minutes and seconds (if any) are secured. The lighting of the electroluminescent layer is controlled by a printed circuit which also operates a motor controlling the watch movement. Whenever the electroluminescent layer is activated by a command directly imparted by the user through a special button, the watch dial is wholly lit.

US Patent US5751662 discloses an analogue timepiece provided with illuminators, such as LEDs, arranged on the dial and on the hour and minute hands, and with electric control means for subsequently alternatively switching on or off the illuminators to allow for example an instant read-out of the time shown on the dial. When the illuminators arranged on the hands are switched on, they will illuminate portions of the dial changing in accordance with the passing of the time as indicated by the hands, as a result of the light emitted by the illuminators on the hands being cast on different portions of the dial according to the rotation of the hands.

It is an object of the present invention to provide a wristwatch having electroluminescent lighting means able to light the whole dial or selected portions thereof so as to emphasize automatically, as well as in an immediate and intuitive manner for the user, the passing of the time indicated by the hands.

This object is fully achieved according to the present invention by virtue of an analog wristwatch having the characteristics defined in the characterizing part of independent claim 1.

Further advantageous characteristics of the invention are the subject-matter of the dependent claims, the contents of which are to be considered as integral and integrating part of the present description.

The characteristics and the advantages of the invention will become apparent from the following detailed description, given purely by way of non-limiting example with reference to the appended drawings, in which:
Figure 1 shows the dial of an analog wristwatch, in the only-time version, according to a preferred embodiment of the invention;
Figure 2 is a block diagram which shows in a simplified form the components of the electroluminescent lighting device associated to the dial of the wristwatch of Figure 1;
Figure 3 shows the dial of an analog wristwatch, in the chronograph version, according to a preferred embodiment of the invention; and
Figure 4 is a block diagram which shows in a simplified form the components of the electroluminescent lighting device associated to the dial of the wristwatch of Figure 3.

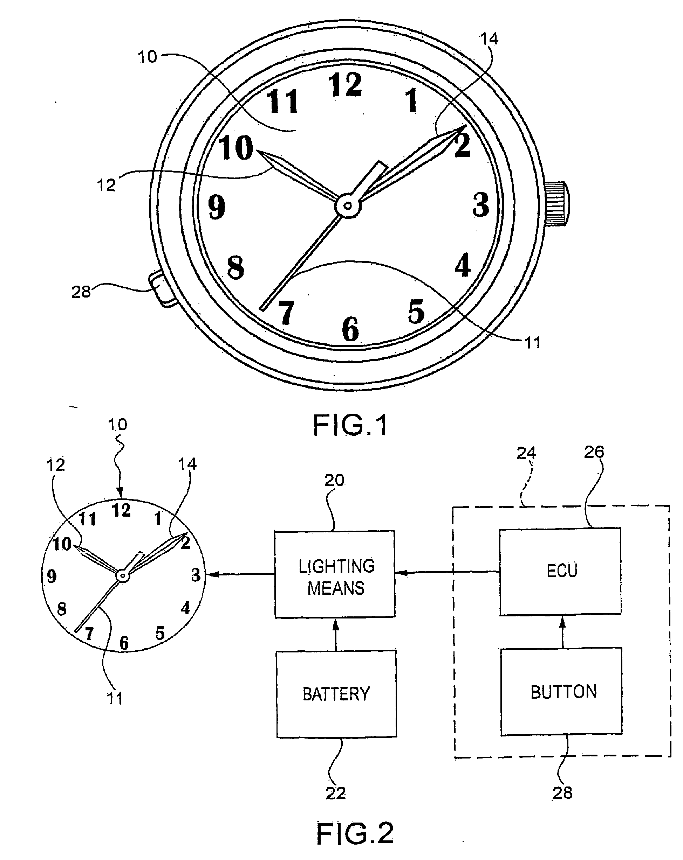

With reference first to Figures 1 and 2, an analog wristwatch in only-time version comprises a dial 10, in which a second hand 11, an hour hand 12 and a minute hand 14 are received, a movement (per-se-known and therefore not illustrated) arranged to control rotation of the hands 11, 12 and 14 so as to indicate the passing of the time, and a lighting device arranged to light the dial 10. The movement may be equally well either a mechanical movement (with manual or automatic charge) or a quartz movement (with automatic or battery charge).

As schematically illustrated in Figure 2, the lighting device includes electroluminescent lighting means 20 (per-se-known and therefore not described in detail), supply means 22 consisting for instance in a common lithium battery, and control means 24 able to control the activation and the deactivation of the electroluminescent lighting means 20 according to predefined operating modes. More particularly, the control means 24 include an electronic control unit 26 operatively associated to the electroluminescent lighting means 20 to activate them at a given start time, and a control button 28 - possibly integrated into the winder of the wristwatch - operatively associated to the electronic control unit 26 and operable by the user to establish the aforesaid start time, to start and stop the counting of a predefined time interval and to switch off the dial 10, once this latter has been lit by the electroluminescent lighting means 20, before the predefined time interval has lapsed. Otherwise, the dial 10 will switch off, once lit by the electroluminescent lighting means 20, after the predefined time interval has lapsed.

According to a variant of embodiment, the electroluminescent lighting means and the associated control means are arranged to light the dial not in an ON/OFF way, that is to say, all or nothing, as in the embodiment described above, but progressively in synchrony with the time indicated by the watch hands. It may be envisaged for instance that, once the lighting device has been activated by depression of the control button 28, a dial portion comprised between a given start position (preferably the position at 0 minutes) and the position currently assumed by the minute hand 14 is lit, whereby the user is given an immediate and intuitive indication of the position of the minute hand.

Alternatively, the dial may be partially and progressively lit not in a continuous manner according to the motion of a hand, but in a discrete manner, for instance at intervals equal to fractions of a turn, preferably to a quarter of a turn. In this way, when for instance the 15-minute position is reached by the minute hand 14 the dial sector comprised between the 0-minute position and the 15-minute position will be lit, when the 30-minute position is reached the dial sector comprised between the 0-minute position and the 30-minute position will be lit and so on.

Still according to a discrete lighting mode of the dial in synchrony with the time indicated by the watch hands, it may be envisaged to light only the quarter of dial where the reference hand is located. For instance, as long as the minute hand 14 is located between the 0-minute position and the 15-minute position the first quarter of dial will be lit, after the 15-minute position has been passed and until the 30-minute position has been reached only the second quarter of dial will be lit and so on.

A discrete and progressive lighting of the dial is particularly advantageous if associated to the motion of the hour hand 12. Also in this case, the dial 10 is lit by circular sectors, the number of circular sectors being variable from a minimum of four to a maximum of twelve. The circular sector are thus lit in succession one after the other according to the rotation of the hour hand 12. For instance, in a dial split into four sectors, each corresponding to a time interval of three hours, whenever the pin that drives the hour hand 12 rotates by a quarter of a turn, the hand 12 closes a special electrical circuit thereby causing the corresponding dial sector to be lit. In other words, when the hour hand 12 reaches the 3-o'clock position the electroluminescent lighting means 20 associated to the dial sector comprised between 3 o'clock and 6 o'clock are activated, when the hour hand 12 reaches the 6-o'clock position the electroluminescent lighting means 20 associated to the dial sector comprised between 3 o'clock and 6 o'clock are deactivated and the electroluminescent lighting means 20 associated to the dial sector comprised between 6 o'clock and 9 o'clock are activated, and so on until the user decides to stop the automatic lighting function by operating the control button 28. In this way, the user is given the possibility to perceive immediately which phase of the day it is, this possibility turning out to be particularly useful by night and in poorly-lit closed spaces.

According to another embodiment, the hand 11 may serve to measure the seconds and may be activated by the button 28. In this way, the second-measuring function through the hand 11 and the lighting of the dial 10 through the electroluminescent lighting means 20 are started simultaneously when the button 28 is pressed.

According to a further embodiment, not forming part of the invention, the hands 11, 12 and 14 themselves may be lit as a result of the activation of the lighting function through the button 28. According to another embodiment, also the reference numerals on the dial 10 may be progressively lit by the electroluminescent lighting means in synchrony with the passing of the time indicated by the watch hands. Also in this way the user is allowed to immediately and easily read, or at least perceive, the time indicated by the wristwatch even in conditions of low visibility, for instance by night and/or in poorly-lit closed spaces.

As will be readily understood, in all the examples given above the lighting of the watch dial, be it involving the whole dial or only a portion thereof (where the term "portion" is used to indicate also the sole hands or the sole numerical indexes), is automatically linked to the passing of the time indicated by the watch hands, regardless of whether they are hour hands or minute hands.

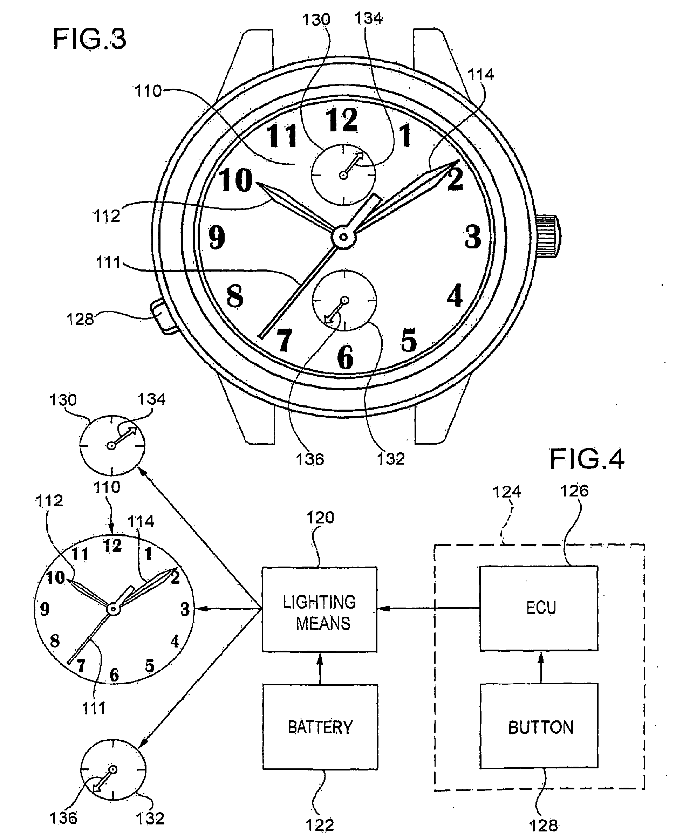

With reference now to Figures 3 and 4, where parts and elements identical or corresponding to those of Figures 1 and 2 have been given the same reference numerals increased by 100, an analog chronograph-type wristwatch according to the invention will be described.

The analog wristwatch shown in Figures 3 and 4 comprises a main dial 110 with a first second hand 111, a second hour hand 112 and a third minute hand 114, and at least first and second secondary dials 130 and 132 for the timing function which have a hand 134 for measuring the seconds and a hand 136 for measuring the minutes, respectively. Further secondary dials may of course be provided for other functions, for instance for measuring the hours or for the countdown function. The wristwatch further comprises a mechanical movement (of per-se-known type and hence not illustrated), and a lighting device arranged to light the main dial 110 and the secondary dials 130 and 132. As far as the movement is concerned, the same considerations apply as those exposed above with reference to the only-time version previously described.

As schematically illustrated in Figure 4, the lighting device includes electroluminescent lighting means 120, supply means 122 consisting for instance in a common lithium battery, and control means 124 arranged to control the activation and the deactivation of the electroluminescent lighting means 120 according to predefined operating modes. More particularly, the control means 124 include an electronic control unit 126 operatively associated to the electroluminescent lighting means 120 and to the supply means 122, and a control button 128 operatively associated to the electronic control unit 126 and operable by the user to activate or deactivate the timing function and the associated automatic lighting function.

Also in this case, the total or partial lighting of the main dial 110 and/or of the secondary dials 130 and 132 is linked to the passing of the time indicated by the watch hands.

For instance, it may be envisaged that, once the timing has been started, the second-measuring secondary dial 130 is wholly lit by the electroluminescent lighting means 120 as from the time when the timing starts and for a given time interval, preferably one minute, and is then switched off. From this time onwards, the minute-measuring secondary dial 132 may be lit for a given time interval, preferably 60 minutes, and then switched off.

More specifically, the activation of the electroluminescent lighting means 120 associated to the second-measuring secondary dial 130 coincides with the start of the timing function operated by depression of a timing control button 128. Upon rotation of the second hand 134 by an entire turn, a special electrical circuit controlling the activation of the minute hand 136 and the simultaneous and automatic activation of the electroluminescent lighting means associated to the second-measuring secondary dial 132 is closed. A further depression of the control button 128 interrupts the timing function and stops the hands 134 and 136 in the position reached. The depression of a further control button causes the chronometer to be reset and also the electroluminescent lighting means associated to all the lit dials to be deactivated.

The user can thus perceive immediately and intuitively the time measured by the chronometer, without being distracted by the other functions of the wristwatch.

A dial lighting of the same type as the one described above with reference to the various embodiments of the wristwatch in the only-time version may be associated to the passing of the minutes indicated by the minute hand 114 in the main dial 110.

Naturally, the principle of the invention remaining unchanged, the embodiments and details of construction may vary widely within the scope of the claims, from those described and illustrated purely by way of non-limiting example.

## Claims

1. Analog wristwatch comprising a main dial (10; 110) in which at least one pair of hands (12, 14; 112, 114) are received for indicating the hours and the minutes, respectively, and a lighting device arranged to light the main dial (10; 110), wherein said lighting device includes electroluminescent lighting means (20; 120) associated with discrete portions of the main dial (10; 110) and control means (24; 124) for activating and deactivating the electroluminescent lighting means (20; 120), said control means (24; 124) being arranged to activate and deactivate automatically the lighting of the electroluminescent means associated with a sub-set of said discrete portions of the main dial (10; 110) which differ from time to time according to the passing of the time as indicated by either of the hands (12, 14; 112, 114).

2. Wristwatch according to claim 1, wherein said control means (24; 124) are arranged to activate automatically the lighting of the electroluminescent means associated with a sub-set of said discrete portions of the main dial (10; 110) which differ from time to time according to the passing of the minutes as indicated by the minute hand (14; 114).

3. Wristwatch according to claim 2, wherein said control means (24; 124) are arranged to activate automatically the lighting of the electroluminescent means associated with a sector of the main dial (10; 110) having an area progressively increasing up to the position currently assumed by the minute hand (14; 114).

4. Wristwatch according to claim 2, wherein said control means (24; 124) are arranged to activate automatically the lighting of the electroluminescent means associated with a sector of the main dial (10; 110) of predetermined area in which the minute hand (14; 114) is currently located.

5. Wristwatch according to any of the preceding claims, further comprising at least one secondary dial (130, 132) acting as a chronometer, in which there is arranged a respective hand (134, 136) for measuring the seconds or the minutes, said control means (124) being arranged to activate automatically the lighting of the electroluminescent means associated with said at least one secondary dial (130, 132) when the timing function is started and to deactivate automatically the lighting of the electroluminescent means associated with said at least one secondary dial (130, 132) upon completion of a whole turn by the hand of that dial.

6. Wristwatch according to claim 5, comprising a first secondary dial (130) with a first hand (134) for measuring the seconds and a second secondary dial (132) with a second hand (136) for measuring the minutes, wherein said control means (124) are arranged to activate the lighting of the electroluminescent means associated with the first secondary dial (130) when the timing is started, to deactivate the lighting of the electroluminescent means associated with the first secondary dial (130) and to activate the lighting of the electroluminescent means associated with the second secondary dial (132) upon completion of a whole turn by the first hand (134) and to deactivate the lighting of the electroluminescent means associated with the second secondary dial (132) upon completion of a whole turn by the second hand (136).

7. Wristwatch according to any of the preceding claims, further comprising supply means (22; 122) operatively associated to the control means (24; 124).

8. Wristwatch according to claim 7, wherein said control means (24; 124) include an electronic control unit (26; 126) operatively associated to the electroluminescent lighting means (20; 120) and a control button (28; 128) operatively associated to the electronic control unit (26; 126) and operable by the user to activate or deactivate the lighting function.

## Patentansprüche

1. Analoge Armbanduhr, umfassend ein Hauptziffernblatt (10; 110), in welchem wenigstens ein Paar Zeiger (12, 14; 112, 114) zum Anzeigen der Stunden bzw. der Minuten aufgenommen ist, und eine Beleuchtungseinrichtung, welche dazu eingerichtet ist, das Hauptziffernblatt (10; 110) zu beleuchten, wobei die Beleuchtungseinrichtung elektrolumineszente Beleuchtungsmittel (20; 120), welche diskreten Abschnitten auf dem Hauptziffernblatt (10; 110) zugeordnet sind, und Steuerungsmittel (24; 124) zum Aktivieren und Deaktivieren der elektrolumineszenten Beleuchtungsmittel (20; 120) umfasst, wobei die Steuerungsmittel (24; 124) dazu eingerichtet sind, automatisch die Beleuchtung der elektrolumineszenten Mittel zu aktivieren und zu deaktivieren, welche einer Teilmenge der diskreten Abschnitte des Hauptziffernblattes (10; 110) zugeordnet sind, welche sich von Zeit zu Zeit gemäß dem Verlauf der Zeit, wie durch einen der Zeiger (12, 14; 112, 114) angezeigt, unterscheiden.

2. Armbanduhr nach Anspruch 1, wobei die Steuerungsmittel (24; 124) dazu eingerichtet sind, automatisch die Beleuchtung der elektrolumineszenten Mittel zu aktivieren, welche einer Teilmenge der diskreten Abschnitte des Hauptziffernblattes (10; 110) zugeordnet sind, welche sich von Zeit zu Zeit gemäß dem Verlauf der Minuten, wie durch den Minutenzeiger (14, 114) angezeigt, unterscheiden.

3. Armbanduhr nach Anspruch 2, wobei die Steuerungsmittel (24; 124) dazu eingerichtet sind, automatisch die Beleuchtung der elektrolumineszenten Mittel zu aktivieren, welche einem Sektor des Hauptziffernblattes (10; 110) zugeordnet sind, welcher einen Bereich aufweist, welcher bis zu der momentan eingenommenen Position des Minutenzeigers (14; 114) progressiv anwächst.

4. Armbanduhr nach Anspruch 2, wobei die Steuerungsmittel (24; 124) dazu eingerichtet sind, automatisch die Beleuchtung der elektrolumineszenten Mittel zu aktivieren, welche einem Sektor des Hauptziffernblattes (10; 110) mit vordefinierter Fläche zugeordnet sind, in welcher sich der Minutenzeiger (14; 114) momentan befindet.

5. Armbanduhr nach einem der vorhergehenden Ansprüche, ferner umfassend wenigstens ein als ein Chronometer agierendes Zweitziffernblatt (130, 132), in welchem ein jeweiliger Zeiger (134, 136) zum Messen der Sekunden oder der Minuten angeordnet ist, wobei die Steuerungsmittel (124) dazu eingerichtet sind, automatisch die Beleuchtung der elektrolumineszenten Mittel, welche dem wenigstens einen Zweitziffernblatt (130, 132) zugeordnet sind, zu aktivieren, wenn die Zeitnahmefunktion gestartet wird und automatisch die Beleuchtung der elektrolumineszenten Mittel, welche dem wenigstens einen Zweitziffernblatt (130, 132) zugeordnet sind, bei Vollendung eines gesamten Umlaufs durch die Zeiger dieses Ziffernblattes zu deaktivieren.

6. Armbanduhr nach Anspruch 5, umfassend ein erstes Zweitziffernblatt (130) mit einem ersten Zeiger (134) zum Messen der Sekunden und ein zweites Zweitziffernblatt (132) mit einem zweiten Zeiger (136) zum Messen der Minuten, wobei die Steuerungsmittel (124) dazu eingerichtet sind, die Beleuchtung der dem ersten Zweitziffernblatt (130) zugeordneten elektrolumineszenten Mittel dann zu aktivieren, wenn die Zeitnahme gestartet wird, bei Vollendung eines gesamten Umlaufs durch den ersten Zeiger (134) die Beleuchtung der dem ersten Zweitziffernblatt (130) zugeordneten elektrolumineszenten Mittel zu deaktivieren und die Beleuchtung der dem zweiten Zweitziffernblatt (132) zugeordneten elektrolumineszenten Mittel zu aktivieren, und bei Vollendung eines gesamten Umlaufs durch den zweiten Zeiger (136) die Beleuchtung der dem zweiten Zweitziffernblatt (132) zugeordneten elektrolumineszenten Mittel zu deaktivieren.

7. Armbanduhr nach einem der vorhergehenden Ansprüche, ferner umfassend Versorgungsmittel (22; 122), welche den Steuerungsmitteln (24; 124) betriebsmäßig zugeordnet sind.

8. Armbanduhr nach Anspruch 7, wobei die Steuerungsmittel (24; 124) eine elektronische Steuerungseinheit (26; 126), welche den elektrolumineszenten Beleuchtungsmitteln (20; 120) betriebsmäßig zugeordnet sind, und einen Steuerungsknopf (28; 128), welcher der elektronischen Steuerungseinheit (26; 126) betriebsmäßig zugeordnet ist und von dem Benutzer dazu bedienbar ist, die Beleuchtungsfunktion zu aktivieren oder zu deaktivieren, umfassen.

## Revendications

1. Montre-bracelet comprenant un cadran principal (10 ; 110) dans lequel au moins une paire d'aiguilles (12, 14 ; 112, 114) sont reçues pour indiquer respectivement les heures et les minutes, et un dispositif d'éclairage adapté pour éclairer le cadran principal (10 ; 110), dans laquelle ledit dispositf d'éclairage comprend un moyen d'éclairage électroluminescent (20 ; 120) associé à des parties discrètes du cadran principal (10 ; 110) et un moyen de commande (24 ; 124) pour activer et désactiver le moyen d'éclairage électroluminescent (20 ; 120), ledit moyen de commande (24 ; 124) étant adapté pour activer et désactiver automatiquement l'éclairage du moyen électroluminescent associé à un sous-ensemble desdites parties discrètes du cadran principal (10 ; 110) qui diffèrent de temps en temps selon l'écoulement du temps indiqué par l'une ou l'autre des aiguilles (12, 14 ; 112, 114).

2. Montre-bracelet selon la revendication 1, dans laquelle ledit moyen de commande (24 ; 124) est adapté pour activer automatiquement l'éclairage du moyen électroluminescent associé à un sous-ensemble desdites parties discrètes du cadran principal (10 ; 110) qui diffèrent de temps en temps selon l'écoulement des minutes indiqué par l'aiguille des minutes (14 ; 114).

3. Montre-bracelet selon la revendication 2, dans laquelle ledit moyen de commande (24 ; 124) est adapté pour activer automatiquement l'éclairage du moyen électroluminescent associé à un secteur du cadran principal (10 ; 110) ayant une aire qui augmente progressivement jusqu'à la position courante de l'aiguille des minutes (14 ; 114).

4. Montre-bracelet selon la revendication 2, dans laquelle ledit moyen de commande (24 ; 124) est adapté pour activer automatiquement l'éclairage du moyen électroluminescent associé à un secteur du cadran principal (10 ; 110) ayant une aire prédéterminée quand l'aiguille des minutes (14 ; 114) se trouve dans ledit secteur.

5. Montre-bracelet selon l'une quelconque des revendications précédentes, comprenant en outre au moins un cadran secondaire (130, 132) faisant fonction de chronomètre, dans lequel est placée une aiguille respective (134, 136) pour mesurer les secondes ou les minutes, ledit moyen de commande (124) étant adapté pour activer automatiquement l'éclairage du moyen électroluminescent associé audit au moins un cadran secondaire (130, 132) quand la fonction de chronométrage est démarrée et pour désactiver automatiquement l'éclairage du moyen électroluminescent associé audit au moins un cadran secondaire (130, 132) après l'achèvement d'un tour complet par l'aiguille de ce cadran.

6. Montre-bracelet selon la revendication 5, comprenant un premier cadran secondaire (130) ayant une première aiguille (134) pour mesurer les secondes et un deuxième cadran secondaire (132) ayant une deuxième aiguille (136) pour mesurer les minutes, dans laquelle ledit moyen de commande (124) est adapté pour activer l'éclairage du moyen électroluminescent associé au premier cadran secondaire (130) quand le chronométrage est démarré, pour désactiver l'éclairage du moyen électroluminescent associé au premier cadran secondaire (130) et pour activer l'éclairage du moyen électroluminescent associé au deuxième cadran secondaire (132) après l'achèvement d'un tour complet par la première aiguille (134) et pour désactiver l'éclairage du moyen électroluminescent associé au deuxième cadran secondaire (132) après l'achèvement d'un tour complet par la deuxième aiguille (136).

7. Montre-bracelet selon l'une quelconque des revendications précédentes, comprenant en outre un moyen d'alimentation (22 ; 122) associé fonctionnellement au moyen de commande (24 ; 124).

8. Montre-bracelet selon la revendication 7, dans laquelle ledit moyen de commande (24 ; 124) comprend une unité de commande électronique (26 ; 126) associée fonctionnellement au moyen d'éclairage électroluminescent (20 ; 120) et un bouton de commande (28 ; 128) associé fonctionnellement à l'unité de commande électronique (26 ; 126) et pouvant être employé par l'utilisateur pour activer ou désactiver la fonction d'éclairage.
